# EUROPEAN PATENT APPLICATION

(11) **EP 4 629 355 A1**
(43) Date of publication of application: **08.10.2025**
(21) Application number: 24168707.8
(22) Date of filing: 05.04.2024
(51) Int. Cl.: H01M 8/04291, B60L 50/72, H01M 8/04014

(54) **A FUEL CELL SYSTEM CONFIGURED TO REDUCE EXHAUST WATER MIST AND A METHOD OF OPERATING A FUEL CELL SYSTEM**

(71) Applicant: Volvo Construction Equipment AB, 631 85 Eskilstuna (SE)
(72) Inventor: ASK, Johan, 635 06 ESKILSTUNA (SE); NEILSON, Rohan, 721 31 VÄSTERÅS (SE); GAMBA, Pierre, 635 32 KVICKSUND (SE)
(74) Representative: Ström & Gulliksson AB

(57) **Abstract**

A fuel cell system (1) comprising
- a cell exhaust (10e) for an exhaust mixture comprising water fluid (15) generated in a fuel cell (10) of the fuel cell system (1),
- a cooling assembly (20) for cooling the fuel cell (10) using ambient air (25), and
- a system exhaust (1e),
wherein the fuel cell system (1) is configured to mix the exhaust mixture of the cell exhaust (10e) with heated air (25h) of the cooling assembly (20) to avoid or reduce water mist (5) being expelled from the system exhaust (1e). A method (100) of operating a fuel cell system.

## Description

### TECHNICAL FIELD

The disclosure relates generally to fuel cell systems. In particular aspects, the disclosure relates to a fuel cell system configured to reduce exhaust water mist, or white smoke, and to a method of operating a fuel cell system. The disclosure can be applied to heavy-duty vehicles, such as trucks, buses, and construction equipment, among other vehicle types. Although the disclosure may be described with respect to a particular vehicle, the disclosure is not restricted to any particular vehicle.

### BACKGROUND

A fuel cell system converts chemical energy into electricity, typically by combining hydrogen and oxygen. A byproduct of a fuel cell system is water, which exits an exhaust of the fuel cell system. In some circumstances, the water may exits the fuel cell system in the form of a mist, also referred to as white smoke, which may be undesirable.

### SUMMARY

According to a first aspect of the disclosure, there is provided a fuel cell system comprising: a cell exhaust for an exhaust mixture comprising water fluid generated in a fuel cell of the fuel cell system; a cooling assembly for cooling the fuel cell using ambient air, and; a system exhaust; wherein the fuel cell system is configured to mix the exhaust mixture of the cell exhaust with heated air of the cooling assembly to avoid or reduce water mist being expelled from the system exhaust.

The first aspect of the disclosure may seek to solve the problem of water mist, also referred to as white smoke, being emitted from the fuel cell system. A technical benefit may include that the visibility around the fuel cell system is not impaired by water mist. Further, in cold weathers, icing around the fuel cell system may be reduced. Moreover, the water fluid leaving the fuel cell may less likely be mistaken for malfunction or fire, as the water fluid does not have the visual appearance of smoke. The mixing of the exhaust mixture comprising water fluid of the cell exhaust with the heated air of the cooling assembly may advantageously not require any control or moving parts. Thus, water mist being expelled from the system exhaust may be avoided or reduced in a simple and cost-effective manner. The solution if the present disclosure may be a passive solution, i.e. a solution that does not require any active control.

Optionally in some examples, including in at least one preferred example, the cooling assembly comprises a radiator. A radiator, which is an example of a heat exchanger, may provide efficient cooling. Typically, the radiator comprises a liquid coolant and is adapted to transfer heat from the coolant to ambient air. Thus, the radiator may comprise a coolant.

Optionally in some examples, including in at least one preferred example, the fuel cell system comprises a cooling conduit connecting the radiator to the fuel cell such that the fuel cell may be cooled by means of the radiator.

Optionally in some examples, including in at least one preferred example, the cooling assembly comprises an airflow generator for flowing the ambient air through the radiator. The airflow generator may e.g. be a fan or a blower. The airflow generator, that may cause the ambient air to flow through the radiator, may ensure a sufficient cooling efficiency. Further, the airflow generator may increase the flow of heated air that is mixed with the exhaust mixture of the cell exhaust, such that the water mist expelled from the system exhaust is further reduced or even avoided. Thus, the water fluid may be both heated and diluted. The airflow generator may be positioned upstream or downstream the radiator. If the airflow generator is positioned upstream the radiator, the cooling efficient may be particularly enhanced. If the airflow generator is positioned downstream the radiator, a sufficient flow of heated air that is mixed with the exhaust mixture may be ensured.

Optionally in some examples, including in at least one preferred example, the cooling assembly comprises an airflow generator positioned upstream the radiator and an airflow generator positioned downstream the radiator. Thereby, a sufficient cooling efficient may be ensured while a sufficient flow of heated air that is mixed with the exhaust mixture may be ensured.

Optionally in some examples, including in at least one preferred example, the fuel cell system comprises flow guides for guiding flows from the cell exhaust and the cooling assembly to the system exhaust. A technical benefit may include that proper mixing may be ensured, and in addition that the mixing may, if desired, be controlled.

Optionally in some examples, including in at least one preferred example, the flow guides are configured to guide the exhaust mixture comprising water fluid of the cell exhaust and the heated air of the cooling assembly such that these fluid flows are mixed within the fuel cell system before being expelled from the system exhaust. In other words, the mixing occurs upstream the system exhaust. The flow guides may alternatively be referred to as a flow guide structure. The flow guides, or flow guide structure, may comprise ducts, drums or baffles that guide or direct the flows.

Optionally in some examples, including in at least one preferred example, the flow guides are configured to guide the exhaust mixture comprising water fluid of the cell exhaust and the heated air of the cooling assembly such that these fluid flows are mixed after being expelled from the system exhaust. In other words, the mixing occurs downstream the system exhaust.

Optionally in some examples, including in at least one preferred example, the flow guides are configured to guide the exhaust mixture comprising water fluid of the cell exhaust at least partly within the heated air of the cooling assembly, such that the water fluid of the cell exhaust may be heated by the heated air before being expelled from the system exhaust.

Optionally in some examples, including in at least one preferred example, the flow guides are configured to guide the heated air from the radiator such that the heated air is mixed with the exhaust mixture comprising water fluid of the cell exhaust such that the water fluid is heated and diluted.

Optionally in some examples, including in at least one preferred example, the fuel cell system comprises or is connected to a control unit that is connected to the airflow generator. The control unit may be configured to control the airflow generator. The control unit may be configured to control the speed of the flow of ambient air through the radiator. For example, the airflow generator may be fan and the control unit may be configured to control the fan, typically a rotation of the fan.

Optionally in some examples, including in at least one preferred example, the control unit is configured to boost the airflow generator during startup of the fuel cell system. A technical benefit may include that during startup, a boosted airflow may increase a momentum carrying an exhaust expelled from the system exhaust further away from the fuel cell system. Thus, during startup there may be a temporary increase in dilution of the exhaust mixture comprising water fluid of the cell exhaust. The boost may supplement a temporarily, during startup, suppressed temperature of the heated air of the cooling assembly. A boosted airflow may be an airflow that is higher than a nominal airflow. A boosted airflow may be a flow of air of a speed that is higher than a nominal speed of the flow. A nominal airflow or nominal speed may refer to an airflow or a speed during normal operation. Thus, in other words, the control unit may be configured to temporarily increase the operation of the airflow generator during startup of the fuel cell system.

Optionally in some examples, including in at least one preferred example, the control unit is configured to control the airflow generator such that the flow through the radiator essentially matches the flow of exhaust mixture comprising water fluid from the cell exhaust. The flows may be of substantially the same speed. A technical benefit may include that turbulent mixing may be avoided. The heated air of the cooling assembly may create a stratified boundary that shields the exhaust mixture comprising water fluid. Matching the flow speed through the radiator to the flow speed of the exhaust mixture comprising water fluid may hinder turbulent mixing. Matching the flow speed through the radiator to the flow speed of the exhaust mixture comprising water fluid may create a stratified boundary hindering turbulent mixing. This may be advantageous in case the heated air of the cooling assembly is not sufficient to avoid or reduce water mist being expelled from the system exhaust. Or, in case a droplet distribution of the exhaust mixture of the cell exhaust is expected to be suitably coarse to not look like white smoke.

Optionally in some examples, including in at least one preferred example, the control unit is configured to depress the airflow generator to raise the temperature of the air exiting the radiator. A technical benefit may include that the temperature of the air exiting the radiator may be raised above the temperate of the exhaust mixture of the cell exhaust. A technical benefit may include that the exhaust mixture of the cell exhaust may be heated by the air exiting the radiator such to avoid or reduce water mist being expelled from the system exhaust.

In other words, in accordance with the first aspect there may be provided a fuel cell system that comprises a system exhaust for expelling water fluid generated in a fuel cell of the fuel cell system, a fuel cell cooling assembly comprising a radiator and a fan, and an arrangement for mixing heated air flow from the radiator with the water fluid to reduce water mist, or white smoke, in the exhaust. As a result, the water fluid leaving the fuel cell system may be diluted by the heated air from the cooling assembly. The water fluid leaving the fuel cell system may typically be partly in liquid form and partly in gas form.

According to a second aspect of the disclosure, there is provided a vehicle comprising the fuel cell system.

Optionally in some examples, including in at least one preferred example, the vehicle is a heavy-duty vehicle. It may be desirable to avoid vehicles, including heavy-duty vehicles, being furnished with combustion engines. Typically, a high voltage battery together with an electric powertrain may replace or supplement a combustion engine. Heavy-duty vehicles may, at least in some instances, be less suitable for being powered by a high voltage battery, and may be particularly suitable for being powered by a fuel cell system.

According to a third aspect of the disclosure, there is provided a method of operating a fuel cell system, the method comprising mixing water fluid of a cell exhaust with heated air of a cooling assembly to avoid or at least reduce water mist being expelled from the fuel cell system. Such a method may be relatively simple to implement and control.

Optionally in some examples, including in at least one preferred example, the method comprises: taking in air; heating the intake air while cooling a fuel cell of the fuel cell system by means of a cooling assembly; mixing the heated air with water fluid of a cell exhaust; and expelling the mixture of heated air and water fluid from the fuel cell system.

Optionally in some examples, including in at least one preferred example, the method is performed independently of the ambient temperature. Thus, there may be no need to measure the ambient temperature, and no need to consider the ambient temperature when performing the method.

Optionally in some examples, including in at least one preferred example, taking in air comprises controlling an airflow generator, such as a fan.

Optionally in some examples, including in at least one preferred example, the method comprises boosting the airflow generator during startup of the fuel cell system. Boosting the airflow generator may involve temporarily increasing an operation of an airflow generator, as has been described.

Optionally in some examples, including in at least one preferred example, the method comprises controlling the airflow generator such that the flow through the radiator essentially matches the flow of exhaust mixture comprising water fluid.

Optionally in some examples, including in at least one preferred example, the method comprises depressing the airflow generator (temporarily decreasing its operation) to raise the temperature of the air exiting the radiator.

As regards advantages, and further possible features, of the second and third aspects reference is made to those associated with the first aspect.

The disclosed aspects, examples (including any preferred examples), and/or accompanying claims may be suitably combined with each other as would be apparent to anyone of ordinary skill in the art. Additional features and advantages are disclosed in the following description, claims, and drawings, and in part will be readily apparent therefrom to those skilled in the art or recognized by practicing the disclosure as described herein.

### BRIEF DESCRIPTION OF THE DRAWINGS

Examples are described in more detail below with reference to the appended drawings.
**FIG. 1** to **FIG. 4** are exemplary schematic illustrations of fuel cell systems according to examples.
**FIG. 5** and **FIG.** 6 show vehicles that may comprise the fuel cell systems illustrated in **FIG. 1** to **FIG. 4****.**
**FIG. 7** illustrates a method of operating a fuel cell system.

### DETAILED DESCRIPTION

The detailed description set forth below provides information and examples of the disclosed technology with sufficient detail to enable art to practice the disclosure.

An inventive concept of the present disclosure involves using air from a cooling assembly to dilute and heat a humid exhaust from a fuel cell, to thereby in a relatively simple manner effectively at least reduce mist.

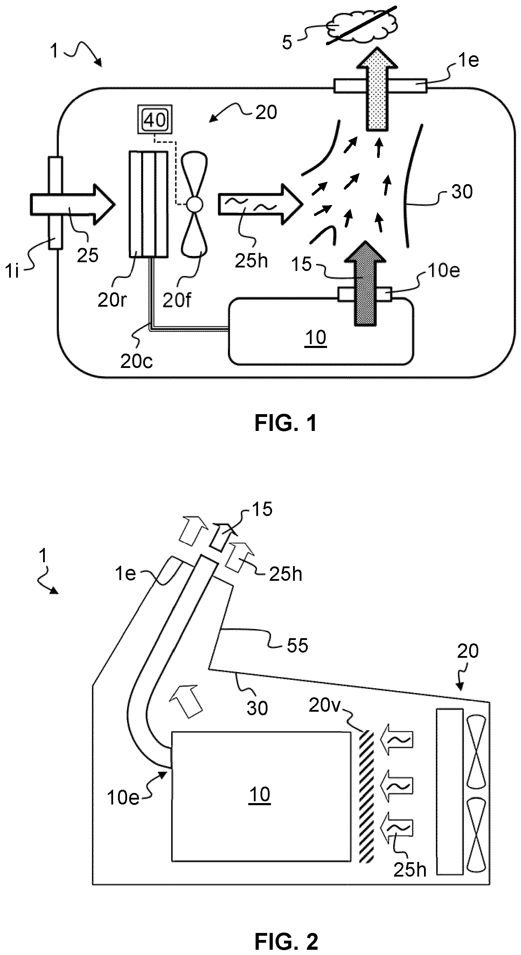

**FIG. 1** shows a fuel cell system 1 comprising a fuel cell 10 and a cooling assembly 20. The fuel cell system 1 comprises a system exhaust 1e and the fuel cell 10 comprises a cell exhaust 10e. During operation, hydrogen and oxygen are combined in the fuel cell 10 to generated electricity, in a manner known to those skilled in the art. Also generated in the fuel cell 10 are heat and water. The water may typically exit the cell exhaust 10e partly in liquid form and partly in gas form. Thus, the cell exhaust 10e is for an exhaust mixture comprising water fluid 15 generated in the fuel cell 10. The exhaust mixture comprising water fluid 15 that exits the cell exhaust 10e may in short be referred to as water fluid 15. Typically, the cell exhaust 10e expels liquid water, gaseous water and air, and possibly some hydrogen gas. For simplicity, the cell exhaust 10e may herein be described as being for water fluid 15.

The cooling assembly 20 is for cooling the fuel cell 10 using ambient air 25. In **FIG. 1****,** the ambient air 25 that is taken in into the fuel cell system 1 is indicated by a hollow arrow. The ambient air 25 may for example be taken in through a system intake 1i, as shown in **FIG. 1****.** The ambient air 25 that has been taken in may be referred to as intake air 25. Heated air 25h, indicated by a hollow arrow with heat waves, exits the cooling assembly 20.

As is illustrated e.g. by the plurality of small arrows in **FIG. 1****,** the fuel cell system 1 is configured to mix the water fluid 15 of the cell exhaust 10e with the heated air 25h of the cooling assembly 20. As a result, water mist 5 being expelled from the system exhaust 1e may be avoided or at least reduced. Said water fluid 15 may comprise water in gas form, and is indicated by a dark grey arrow in figure 1.

When the temperature of the water fluid 15 of the cell exhaust 10e is increased by the heated air 25h, and when the water fluid 15 of the cell exhaust 10e is diluted by the heated air 25h, water mist 5 being expelled from the system exhaust 1e may be avoided or at least reduced. The increased temperature and the dilution both act to at reduce, or avoid, that there is any water mist 5 being expelled from the system exhaust 1e since the temperature increase and the dilution both act to move the body of fluid outside the system exhaust 1e away from the dew point.

The fluid or exhaust, more precisely mix of heated air 25h and water fluid 15, that is expelled from the system exhaust 1e is indicated by a dotted or light grey hollow arrow. The hollow arrow is light grey to illustrate that there is some humidity in the fluid or exhaust of the system exhaust 1e, but typically not enough humidity to form a mist. The water mist 5, that is to be avoided or reduced, is illustrated by a crossed-over cloud.

Still referring **FIG. 1****,** the cooling assembly 20 may comprise a radiator 20r. Ambient (unheated) air 25 enters the radiator 20r and heated air 25h exits the radiator 20r. Typically, the radiator 20r comprises an undepicted coolant. Furthermore, typically, the fuel cell system 1 comprises a cooling conduit 20c that connects the radiator 20r to the fuel cell 10, such that the fuel cell 10 may be cooled by means of the radiator 20r. Thus, the coolant may be heated in the fuel cell 10 when cooling the fuel cell 10, flow through the cooling conduit 20c to the radiator 20r, and then be cooled in the radiator 20r by transferring heat to the air that passes through the radiator 20r. The cooled coolant then flows back through the cooling conduit 20c to the radiator 20r. In other words, a coolant circuit or coolant loop is formed by the cooling conduit 20c. The cooling conduit 20c comprises a first conduit section for a flow from the radiator 20r to the fuel cell 10 and a second conduct section for a flow from the fuel cell 10 to the radiator 20r. As is also illustrated, the cooling assembly 20 may comprise an airflow generator 20f, in the present example a fan, for causing the ambient air 25 to flow through the radiator 20r.

**FIG. 1** shows flow guides 30 for guiding flows from the cell exhaust 10e and from the cooling assembly 20 to the system exhaust 1e. The plurality of small arrows indicate how the flows are guided by the flow guides 30. The flow guides 30 may be, as is shown, configured to mix the water fluid 15 of the cell exhaust 10e with the heated air 25h of the cooling assembly 20.

The water fluid 15 of the cell exhaust 10e is indicated by a dark grey arrow to illustrate that the water fluid 15 humid, any may typically form a mist if expelled from the system exhaust 1e without any treatment.

As is illustrated in **FIG. 1****,** the flow guides 30 may be configured to guide the water fluid 15 of the cell exhaust 10e and the heated air 25h of the cooling assembly 20 such that these fluid flows are mixed within the fuel cell system 1 before being expelled from the system exhaust 1e.

Referring to the example of **FIG. 2****,** the flow guides 30 may alternatively be configured to guide the water fluid 15 of the cell exhaust 10e and the heated air 25h of the cooling assembly 20 such that these fluid flows are mixed after being expelled from the system exhaust 1e. As is also illustrated in of **FIG. 2****,** the flow guides 30 may be configured to guide the water fluid 15 of the cell exhaust 10e at least partly within the heated air 25h of the cooling assembly 20, such that the water fluid 15 may be heated by the heated air 25h before being expelled from the system exhaust 1e. For example, the flow guides 30 may comprise a water fluid 15 pipe assembly that extends inside a heated air 25h pipe assembly.

In other words, the flow guides 30 may be configured to guide the heated air 25h from the radiator 20r such that the heated air 25h is mixed with the water fluid 15 of the cell exhaust 10e such that the water fluid 15 is heated and diluted.

As is schematically indicated in **FIG. 1****,** the fuel cell system 1 may comprise a control unit 40 that is connected to the airflow generator 20f. Alternatively, the fuel cell system 1 may be connected to an external undepicted control unit 40 that is connected to the airflow generator 20f.

For example, the control unit 40 may be configured to boost the airflow generator 20f during startup of the fuel cell system 1. The control unit 40 may alternatively, or in addition, be configured to control the airflow generator 20f such that the flow through the radiator 20r essentially matches the flow of exhaust mixture comprising water fluid 15 from the cell exhaust 10e. The control unit 40 may alternatively, or in addition, be configured to depress the airflow generator 20f to raise the temperature of the air exiting the radiator 20r.

The control unit that controls the airflow generator 20f may be provided with data regarding the runtime of the fuel cell system 1 and/or regarding the flow of the exhaust mixture comprising water fluid 15 and/or the temperature of the flow of exhaust mixture comprising water fluid 15. For example, the fuel cell system 1 may comprise a temperature sensor that is arranged to measure the temperature of the flow of exhaust mixture comprising water fluid 15, and said temperature sensor may be connected to the control unit that controls the airflow generator 20f. There may be a corresponding flow sensor.

As is indicated in **FIG. 2****,** the fuel cell system 1 may comprise an adjustable valve 20v that is arranged to adjust the flow of heated air 25h from the cooling assembly 20 that is mixed with the water fluid 15 of the cell exhaust 10e. The adjustable valve 20v may be controlled depending on a temperature of the water fluid 15 of the cell exhaust 10e. The adjustable valve 20v may be controlled by the control unit 40, or by external undepicted control unit 40. Such a valve 20v may be arranged to regulate the flow of heated air 25h that is allowed to enter into the flow guides 30. The control unit that controls the adjustable valve 20v may be connected to a temperature sensor that is arranged to measure the temperature of the flow of exhaust mixture comprising water fluid 15.

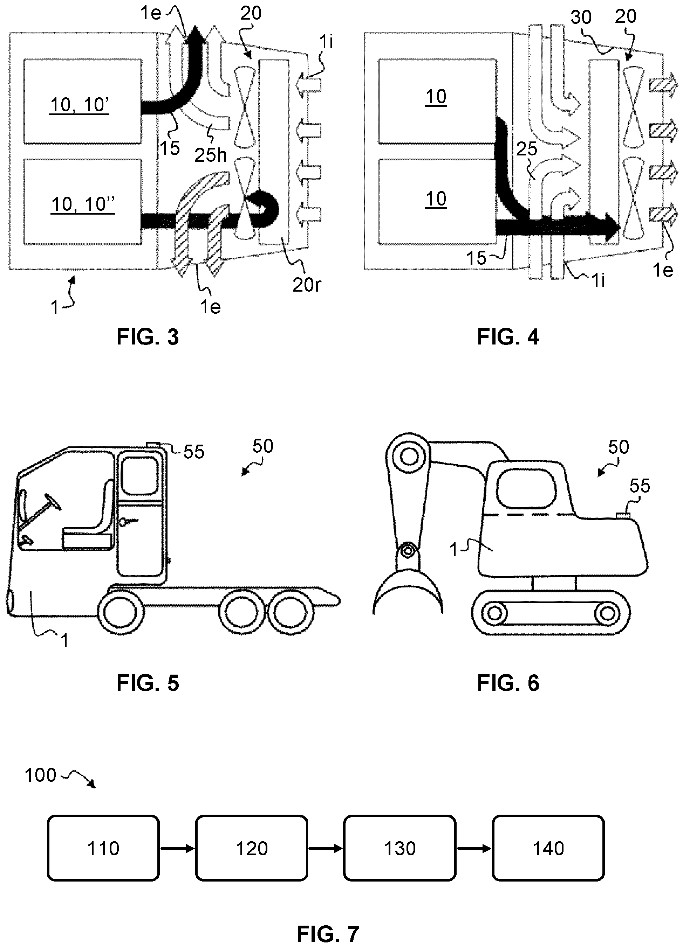

The fuel cell systems 1 exemplified in **FIG. 2** to **FIG. 4** comprise a cell exhaust 10e for an exhaust mixture comprising water fluid 15 generated in a fuel cell 10 of the fuel cell system 1, a cooling assembly 20 for cooling the fuel cell 10 using ambient air 25, and a system exhaust 1e, wherein the fuel cell system 1 is configured to mix the exhaust mixture of the cell exhaust 10e with heated air 25h of the cooling assembly 20 to avoid or reduce water mist 5 being expelled from the system exhaust 1e. Not all features that are shown in **FIG. 1** are shown in **FIG. 2** to **FIG. 4****,** but it is to be apprehended that the examples of **FIG. 2** to **FIG. 4** may comprise e.g. cooling conduits 20c and a control unit 40. As is shown, the examples of **FIG. 3** and **FIG.** 4 comprise dual a fuel cells 10 (10', 10"), which may be implemented in the examples of **FIG. 1** and **FIG. 2** as well.

Turning to **FIG. 3****,** the exhaust mixture of the first fuel cell 10' is mixed with heated air 25h from the cooling assembly 20 downstream the downstream the cooling assembly 20 but upstream the cell exhaust 1e. The exhaust mixture of the second fuel cell 10" passes through the cooling assembly 20, more precisely through the airflow generator 20f, and thus the mixing occurs within the cooling assembly 20 but upstream the cell exhaust 1e. There may be undepicted flow guides 30, such as a pipe assembly, that conducts the exhaust mixture of the second fuel cell 10" to the cooling assembly 20 (radiator 20r). In this example, the cooling assembly 20 comprise two airflow generators 20r in the form of fans.

In the example of **FIG. 4****,** the exhaust mixtures comprising water fluid 15 of the first and second fuel cells 10', 10" are mixed with heated air 25h from the cooling assembly 20 within the cooling assembly 20. The intake air 25 and the exhaust mixtures pass together through the cooling assembly 20. More precisely, the intake air 25 and the water fluid 15 both flow through the airflow generator 20f and through the radiator 20r in the same flow direction (lift to right in **FIG. 4**).

If the mixing of the water fluid 15 and the heated air 25h is performed at least partly within the cooling assembly 20, e.g. within the radiator 20r and/or within the airflow generator 20f, the mixing may be particularly effective and thus water mist 5 being expelled from the system exhaust may be effectively reduced or avoided.

**FIG. 5** shows a vehicle 50, more precisely a heavy duty in the form of a truck that comprises a fuel cell system 1 of one of the types described herein. **FIG. 6** shows a vehicle 50, more precisely a heavy duty in the form of an excavator that comprises a fuel cell system 1 of one of the types described herein.

As is illustrated in a **FIG. 5** and **FIG. 6****,** the vehicle 50 may comprise an exhaust pipe 55, or an exhaust conduit, that is positioned at an elevated position on the vehicle 50. The exhaust pipe 55, more precisely a proximal end thereof, is connected to the system exhaust 1e of the fuel cell system 1. The elevated position of the exhaust pipe 55, more precisely of its distal end, may bring the advantage that the visibility around the vehicle 50, on ground level, is not substantially impaired should some mist 5 form externally the exhaust pipe 55. Further, the elevated position may result in less icing being formed on the ground around the vehicle, should some mist 5 form externally the exhaust pipe 55. In addition, any mist 5 expelled from the elevated exhaust pipe 55 is less likely to be mistaken for malfunction or fire, as people generally would expect smoke being expelled from an elevated exhaust pipe 55. In addition, the exhaust pipe 55 may be directed upwards to enhance these advantages.

A method 100 of operating a fuel cell system 1 is illustrated in **FIG. 7****.** The fuel cell system 1 may for example be one of the types described with reference to **FIG. 1** to **FIG. 4****,** and reference is made these figures for facilitating the understanding of the method. The method 100 comprises mixing 130 an exhaust mixture comprising water fluid of a cell exhaust with heated air of a cooling assembly to avoid or at least reduce water mist being expelled from the fuel cell system 1.

In some detail, the method 100 may comprise taking in 110 air 25, heating 120 the intake air 25 while cooling a fuel cell 10 of the fuel cell system 1 by means of a cooling assembly 20, mixing 130 the heated air 25h with the exhaust mixture comprising water fluid 15, and expelling 140 the mixture of heated air 25h and the exhaust mixture comprising water fluid 15 from the fuel cell system 1. The mixing 130 may be performed upstream or downstream a system exhaust 1e of the fuel cell system 1. The mixing 130 may be performed upstream, downstream, and/or within the cooling assembly 20.

The method 100 may be independent of the ambient temperature. Referring e.g. to the example of **FIG. 1****,** the method 100 may result from a design of a fuel cell system 1, which means that no active control (such as taking action in dependence of a temperature) is required.

Also disclosed are examples according to the following clauses:
1. A fuel cell system (1) comprising
   - a cell exhaust (10e) for an exhaust mixture comprising water fluid (15) generated in a fuel cell (10) of the fuel cell system (1),
   - a cooling assembly (20) for cooling the fuel cell (10) using ambient air (25), and
   - a system exhaust (1e),
   wherein the fuel cell system (1) is configured to mix the exhaust mixture of the cell exhaust (10e) with heated air (25h) of the cooling assembly (20) to avoid or reduce water mist (5) being expelled from the system exhaust (1e).
2. The fuel cell system (1) of clause 1, wherein the cooling assembly (20) comprises a radiator (20r).
3. The fuel cell system (1) of clause 2, wherein the radiator (20r) comprises a coolant.
4. The fuel cell system (1) of clause 2 or 3, comprising a cooling conduit (20c) connecting the radiator (20r) to the fuel cell (10) such that the fuel cell (10) may be cooled by means of the radiator (20r).
5. The fuel cell system (1) according to any of clauses 2 to 4, wherein the cooling assembly (20) comprises an airflow generator (20f), such as a fan, for flowing the ambient air through the radiator (20r).
6. The fuel cell system (1) of any preceding clause, comprising flow guides (30) for guiding flows from the cell exhaust (10e) and the cooling assembly (20) to the system exhaust (1e).
7. The fuel cell system (1) of clause 6, wherein the flow guides (30) are configured to guide the exhaust mixture comprising water fluid (15) of the cell exhaust (10e) and the heated air (25h) of the cooling assembly (20) such that these fluid flows are mixed within the fuel cell system (1) before being expelled from the system exhaust (1e).
8. The fuel cell system (1) of clause 6, wherein the flow guides (30) are configured to guide the exhaust mixture comprising water fluid (15) of the cell exhaust (10e) and the heated air (25h) of the cooling assembly (20) such that these fluid flows are mixed after being expelled from the system exhaust (1e).
9. The fuel cell system (1) of clause 8, wherein the flow guides (30) are configured to guide the exhaust mixture comprising water fluid (15) of the cell exhaust (10e) at least partly within the heated air (25h) of the cooling assembly (20), such that the exhaust mixture comprising water fluid (15) of the cell exhaust (10e) may be heated by the heated air (25h) before being expelled from the system exhaust (1e).
10. The fuel cell system (1) of clauses 1 to 6, wherein the flow guides (30) are configured to guide the heated air (25h) from the radiator (20r) such that the heated air (25h) is mixed with the exhaust mixture comprising water fluid (15) of the cell exhaust (10e) such that the water fluid (15) is heated and diluted.
11. The fuel cell system (1) of clause 5 and any preceding clause, comprising or connected to a control unit (40) that is connected to the airflow generator (20f).
12. The fuel cell system (1) of clause 11, wherein the control unit (40) is configured to boost the airflow generator (20f) during startup of the fuel cell system (1).
13. The fuel cell system (1) of clause 11 or 12, wherein the control unit (40) is configured to control the airflow generator (20f) such that the flow through the radiator (20r) essentially matches the flow of exhaust mixture comprising water fluid (15) from the cell exhaust (10e).
14. The fuel cell system (1) according to any of clauses 11 to 13, wherein the control unit (40) is configured to depress the airflow generator (20f) to raise the temperature of the air exiting the radiator (20r).
15. The fuel cell system (1) of any preceding clause, comprising an adjustable valve (20v) that is arranged to adjust the flow of heated air (25) from the cooling assembly (20) that is mixed with the water fluid (15) of the cell exhaust (10e).
16. The fuel cell system (1) of clause 15, configured to control the adjustable valve (20v) depending on a temperature of the water fluid (15) of the cell exhaust (10e).
17. The fuel cell system (1) of any preceding clause, wherein the fuel cell system (1) is configured to mix the exhaust mixture of the cell exhaust (10e) with heated air (25h) of the cooling assembly (20) within the cooling assembly (20).
18. The fuel cell system (1) of clause 17, wherein the cooling assembly (20) comprises a radiator (20r) and the fuel cell system (1) is configured to mix the exhaust mixture of the cell exhaust (10e) with heated air (25h) of the cooling assembly (20) within the radiator (20r).
19. The fuel cell system (1) according to any of clauses 6 to 10 and clause 17 or 18, configured to guide the exhaust mixture of the cell exhaust (10e) and the heated air (25h) to the cooling assembly (20).
20. A vehicle (50) comprising the fuel cell system (1) of any preceding clause.
21. The vehicle (50) of clause 20, comprising an exhaust pipe (55), or an exhaust conduit, that is connected to the system exhaust (1e) and is configured such that the system exhaust (1e) is positioned at an elevated position on the vehicle (50).
22. The vehicle (50) of clause 21, wherein the exhaust pipe (55) is configured such that the system exhaust (1e) is directed substantially upwards.
23. The vehicle (50) according to any of clauses 20 to 22, wherein the vehicle (50) is a heavy-duty vehicle.
24. The heavy-duty vehicle of clause 23, wherein the heavy duty vehicle is s an excavator, a truck, an articulated hauler, a rigid dump trucks or a wheel loader.
25. A method (100) of operating a fuel cell system (1), the method (100) comprising mixing (130) an exhaust mixture comprising water fluid of a cell exhaust with heated air of a cooling assembly to avoid or at least reduce water mist being expelled from the fuel cell system (1).
26. The method (100) of clause 25, comprising
   - taking in (110) air (25),
   - heating (120) the intake air (25) while cooling a fuel cell (10) of the fuel cell system (1) by means of a cooling assembly (20),
   - mixing (130) the heated air (25h) with the exhaust mixture comprising water fluid (15), and
   - expelling (140) the mixture of heated air (25h) and the exhaust mixture comprising water fluid (15) from the fuel cell system (1).
27. The method (100) of clause 26, wherein the method is performed independently of the ambient temperature.
28. The method (100) according to any of clauses 25 to 27, wherein taking in (110) air (25) comprises controlling an airflow generator (20f).
29. The method (100) of clause 28, comprising boosting the airflow generator (20f) during startup of the fuel cell system (1).
30. The method (100) of clause 28 or 29, comprising controlling the airflow generator (20f) such that the flow through the radiator (20r) essentially matches the flow of exhaust mixture comprising water fluid (15).
31. The method (100) according to any of clauses 28 to 30, comprising depressing the airflow generator (20f) to raise the temperature of the air exiting the radiator (20r).
32. The method (100) according to any of clauses 25 to 31, comprising mixing (130) the heated air (25h) with the exhaust mixture comprising water fluid (15) within the cooling assembly (20).

The terminology used herein is for the purpose of describing particular aspects only and is not intended to be limiting of the disclosure. As used herein, the singular forms "a," "an," and "the" are intended to include the plural forms as well, unless the context clearly indicates otherwise. As used herein, the term "and/or" includes any and all combinations of one or more of the associated listed items. It will be further understood that the terms "comprises," "comprising," "includes," and/or "including" when used herein specify the presence of stated features, integers, actions, steps, operations, elements, and/or components, but do not preclude the presence or addition of one or more other features, integers, actions, steps, operations, elements, components, and/or groups thereof.

It will be understood that, although the terms first, second, etc., may be used herein to describe various elements, these elements should not be limited by these terms. These terms are only used to distinguish one element from another. For example, a first element could be termed a second element, and, similarly, a second element could be termed a first element without departing from the scope of the present disclosure.

Relative terms such as "below" or "above" or "upper" or "lower" or "horizontal" or "vertical" may be used herein to describe a relationship of one element to another element as illustrated in the Figures. It will be understood that these terms and those discussed above are intended to encompass different orientations of the device in addition to the orientation depicted in the Figures. It will be understood that when an element is referred to as being "connected" or "coupled" to another element, it can be directly connected or coupled to the other element, or intervening elements may be present. In contrast, when an element is referred to as being "directly connected" or "directly coupled" to another element, there are no intervening elements present.

As has been mentioned, the disclosed technology may typically be applied to heavy-duty vehicles but marine or stationary applications are not excluded.

Unless otherwise defined, all terms (including technical and scientific terms) used herein have the same meaning as commonly understood by one of ordinary skill in the art to which this disclosure belongs. It will be further understood that terms used herein should be interpreted as having a meaning consistent with their meaning in the context of this specification and the relevant art and will not be interpreted in an idealized or overly formal sense unless expressly so defined herein.

It is to be understood that the present disclosure is not limited to the aspects described above and illustrated in the drawings; rather, the skilled person will recognize that many changes and modifications may be made within the scope of the present disclosure and appended claims. In the drawings and specification, there have been disclosed aspects for purposes of illustration only and not for purposes of limitation, the scope of the disclosure being set forth in the following claims.

## Claims

1. A fuel cell system (1) comprising
- a cell exhaust (10e) for an exhaust mixture comprising water fluid (15) generated in a fuel cell (10) of the fuel cell system (1),
- a cooling assembly (20) for cooling the fuel cell (10) using ambient air (25), and
- a system exhaust (1e),
wherein the fuel cell system (1) is configured to mix the exhaust mixture of the cell exhaust (10e) with heated air (25h) of the cooling assembly (20) to avoid or reduce water mist (5) being expelled from the system exhaust (1e).

2. The fuel cell system (1) of claim 1, wherein the cooling assembly (20) comprises a radiator (20r).

3. The fuel cell system (1) of claim 1 or 2, comprising a cooling conduit (20c) connecting the radiator (20r) to the fuel cell (10) such that the fuel cell (10) may be cooled by means of the radiator (20r).

4. The fuel cell system (1) according to any of claims 1 to 3, wherein the cooling assembly (20) comprises an airflow generator (20f) for flowing the ambient air through the radiator (20r).

5. The fuel cell system (1) of any preceding claim, comprising flow guides (30) for guiding flows from the cell exhaust (10e) and the cooling assembly (20) to the system exhaust (1e).

6. The fuel cell system (1) of claim 5, wherein the flow guides (30) are configured to guide the exhaust mixture comprising water fluid (15) of the cell exhaust (10e) and the heated air (25h) of the cooling assembly (20) such that these fluid flows are mixed within the fuel cell system (1) before being expelled from the system exhaust (1e).

7. The fuel cell system (1) of claim 5, wherein the flow guides (30) are configured to guide the exhaust mixture comprising water fluid (15) of the cell exhaust (10e) and the heated air (25h) of the cooling assembly (20) such that these fluid flows are mixed after being expelled from the system exhaust (1e).

8. The fuel cell system (1) of each one of claims 1 to 5, wherein the flow guides (30) are configured to guide the heated air (25h) from the radiator (20r) such that the heated air (25h) is mixed with the exhaust mixture comprising water fluid (15) of the cell exhaust (10e) such that the water fluid (15) is heated and diluted.

9. The fuel cell system (1) of claim 4 and any preceding claim, comprising or connected to a control unit (40) that is connected to the airflow generator (20f), wherein the control unit (40) is configured to boost the airflow generator (20f) during startup of the fuel cell system (1).

10. The fuel cell system (1) of any preceding claim, wherein the fuel cell system (1) is configured to mix the exhaust mixture of the cell exhaust (10e) with heated air (25h) of the cooling assembly (20) within the cooling assembly (20).

11. The fuel cell system (1) of claim 10, wherein the cooling assembly (20) comprises a radiator (20r) and the fuel cell system (1) is configured to mix the exhaust mixture of the cell exhaust (10e) with heated air (25h) of the cooling assembly (20) within the radiator (20r).

12. A vehicle (50) comprising the fuel cell system (1) of any preceding claim, the vehicle optionally being a heavy-duty vehicle.

13. A method (100) of operating a fuel cell system (1), the method (100) comprising mixing (130) an exhaust mixture comprising water fluid (15) of a cell exhaust with a heated air of a cooling assembly to avoid or at least reduce water mist being expelled from the fuel cell system (1).

14. The method (100) of claim 13, comprising
- taking in (110) air (25),
- heating (120) the intake air (25) while cooling a fuel cell (10) of the fuel cell system (1) by means of a cooling assembly (20),
- mixing (130) the heated air (25h) with the exhaust mixture comprising water fluid, and
- expelling (140) the mixture of heated air (25h) and the exhaust mixture comprising water fluid (15) from the fuel cell system (1).

15. The method (100) of claim 13 or 14, wherein the method is performed independently of the ambient temperature.

## Amended claims

### Amended claims in accordance with Rule 137(2) EPC.

1. A fuel cell system (1) comprising
- a cell exhaust (10e) for an exhaust mixture comprising water fluid (15) generated in a fuel cell (10) of the fuel cell system (1),
- a cooling assembly (20) for cooling the fuel cell (10) using ambient air (25), and
- a system exhaust (1e),
wherein the fuel cell system (1) is configured to mix the exhaust mixture of the cell exhaust (10e) with heated air (25h) of the cooling assembly (20) to avoid or reduce water mist (5) being expelled from the system exhaust (1e), wherein the cooling assembly (20) comprises an airflow generator (20f) for flowing the ambient air through a radiator (20r), wherein the fuel cell system (1) comprising or connected to a control unit (40) that is connected to the airflow generator (20f),
**characterized in that**
the control unit (40) is configured to control the airflow generator (20f) such that the flow through the radiator (20r) essentially matches the flow of exhaust mixture comprising water fluid (15) from the cell exhaust (10e).

2. The fuel cell system (1) of claim 1, comprising a cooling conduit (20c) connecting the radiator (20r) to the fuel cell (10) such that the fuel cell (10) may be cooled by means of the radiator (20r).

3. The fuel cell system (1) of any preceding claim, comprising flow guides (30) for guiding flows from the cell exhaust (10e) and the cooling assembly (20) to the system exhaust (1e).

4. The fuel cell system (1) of claim 3, wherein the flow guides (30) are configured to guide the exhaust mixture comprising water fluid (15) of the cell exhaust (10e) and the heated air (25h) of the cooling assembly (20) such that these fluid flows are mixed within the fuel cell system (1) before being expelled from the system exhaust (1e).

5. The fuel cell system (1) of claim 3, wherein the flow guides (30) are configured to guide the exhaust mixture comprising water fluid (15) of the cell exhaust (10e) and the heated air (25h) of the cooling assembly (20) such that these fluid flows are mixed after being expelled from the system exhaust (1e).

6. The fuel cell system (1) of claim 3, wherein the flow guides (30) are configured to guide the heated air (25h) from the radiator (20r) such that the heated air (25h) is mixed with the exhaust mixture comprising water fluid (15) of the cell exhaust (10e) such that the water fluid (15) is heated and diluted.

7. The fuel cell system (1) of claim 1 and any preceding claim, comprising a control unit (40) that is connected to the airflow generator (20f), wherein the control unit (40) is configured to boost the airflow generator (20f) during startup of the fuel cell system (1).

8. The fuel cell system (1) of any preceding claim, wherein the fuel cell system (1) is configured to mix the exhaust mixture of the cell exhaust (10e) with heated air (25h) of the cooling assembly (20) within the cooling assembly (20).

9. The fuel cell system (1) of claim 8, wherein the cooling assembly (20) comprises a radiator (20r) and the fuel cell system (1) is configured to mix the exhaust mixture of the cell exhaust (10e) with heated air (25h) of the cooling assembly (20) within the radiator (20r).

10. A vehicle (50) comprising the fuel cell system (1) of any preceding claim, the vehicle optionally being a heavy-duty vehicle.

11. A method (100) of operating the fuel cell system (1) of claims 1 to 9, the method (100) comprising mixing (130) an exhaust mixture comprising water fluid (15) of a cell exhaust with a heated air of a cooling assembly to avoid or at least reduce water mist being expelled from the fuel cell system (1),comprising
- taking in (110) air (25),
- heating (120) the intake air (25) while cooling a fuel cell (10) of the fuel cell system (1) by means of a cooling assembly (20),
- mixing (130) the heated air (25h) with the exhaust mixture comprising water fluid, and
- expelling (140) the mixture of heated air (25h) and the exhaust mixture comprising
water fluid (15) from the fuel cell system (1),
wherein taking in (110) air (25) comprises controlling an airflow generator (20f), **characterized in that**
controlling the airflow generator (20f) such that the flow through the radiator (20r) essentially matches the flow of exhaust mixture comprising water fluid (15).

12. The method (100) of claim 11, wherein the method is performed independently of the ambient temperature.
